# EUROPEAN PATENT APPLICATION

(11) **EP 1 981 146 A2**
(43) Date of publication of application: **15.10.2008**
(21) Application number: 07123447.0
(22) Date of filing: 18.12.2007
(51) Int. Cl.: H02J 13/00

(54) **Device for managing an electrical load**

(30) Priority: 11.04.2007 IT PR20070027
(71) Applicant: Sanviti Eletttrocostruzini S.R.L., 43100 PARMA (IT)
(72) Inventor: Sanviti, Vito, 43100 Parma (IT)
(74) Representative: Gotra, Stefano

(57) **Abstract**

A device (1) for managing an electrical user comprises at least one electronic clock defined by a first programmable logic (3), interface means (4) connected to the electronic clock to transmit input and output data into and out of the electronic clock, a management relay (6) controlled by the electronic clock and connectable to an electrical load (2) and a second programmable logic (7), interconnected with the first programmable logic (3) and provided with at least one connection (8) to external control devices (9) to receive control signals of the management relay (6), so that, at pre-determined times, the first logic (3) acts on the management relay (6) and/or on the second logic (7) to cancel or modify the effect of the control devices (9), as a function of the settings received through the interface means (4) and of a remote control.

In known devices, the clocks are connected to an electrical switchboard whereto are connected the management devices and any logic of the clock cannot change the effects of the control devices.

## Description

The present invention relates to a device for managing an electrical load.

Within the field of electrical systems, to let one or more electrical loads connected to a control system operate, normally control devices such as push-buttons or switches are employed, which in turn are connected to an electrical switchboard, which can contain traditional relays or an electronic logic. These devices switch the electrical load on or off, so that the load can be controlled from multiple positions.

In many cases, there is a need to manage the electrical load in timed fashion, i.e. planning for it to be turned on and off at predetermined times. For example, typical loads for which there is an interest in a timed operation are internal lighting systems and electrical outlets, air conditioning systems, machines with high energy consumption. In all these cases, there are multiple interests, which range from energy saving to safety, in activating and deactivating a load automatically, in the absence of personnel, with the possibility for time-based programming.

To achieve this timed operation, a clock is inserted in the electrical system. To make one or more electrical loads operate by means of a clock, an electrical clock connected to an electrical contact, i.e. to a relay, is used, which enables to activate or deactivate the electrical load at the times determined by the clock.

The present invention relates in particular to the cases in which, for the operation of the load, commands external to the clock (e.g. manual commands) are to be used, i.e. said push-buttons and switches.

In this case, the relay of the clock is not connected to the load but an electrical switchboard, which in turn is connected to the load to activate it or deactivate it.

Therefore, according to known technical solutions, the devices for managing a load that provide for planning operations at pre-determined times while allowing to activate and deactivate the load by means of external commands provide for the use of an electrical switchboard connected to an electric clock and equipped with a plurality of relays connected to corresponding control devices.

With regard to the control devices, generally three types are used: one that achieves the OFF command, one that achieves the ON command and one that achieves the OFF and ON commands in succession. The first two types can advantageously be used when it is not possible to assess the effect of the command from the position of the push-button.

In currently used systems, to connect the relays of the electrical switchboard to said control devices (if devices of the different types are present), it is necessary to use at least four conductors (connected to various relays positioned on the switchboard), taking care to operate one of said conductors as shared by all control devices.

However, said management devices have some limitations.

First of all, they are complex and relatively costly, because they require the presence of an electrical switchboard provided with various relays (connected to various conductors) for each clock.

Moreover, the clock is not able to change the effects of the control devices, this entailing safety hazards (e.g. by increasing the risk of fire) and possible service outages due to the impossibility of having an organised control of the loads, which thus can remain powered longer than necessary.

If there is a need to manage a plurality of loads, known solutions (which provide for connecting in parallel a plurality of devices of the type able to manage a single load) do not provide an overall view of the different periods of operation (i.e. operations timed according to pre-determined modes) of the various loads.

An object of the present invention is to eliminate the aforesaid drawbacks and to make available a device for managing an electrical load that is particularly simple and reliable.

Said object is fully achieved by the device of the present invention, which is characterised by the content of the appended claims and in particular because said clock comprises a second programmable logic interconnected with the first programmable logic and provided with at least one connection to external control devices to receive command signals of said management relay, so that, at pre-determined times, the first logic acts on the management relay and/or on the second logic to cancel the effect of the control devices, as a function of the settings received through the interface means.

Therefore, the device according to the present invention solves the aforementioned problems because it does not require the presence of any electrical switchboard and it allows to cancel or modify, by means of the clock, the effects of the control devices. The control devices no longer control an electrical switchboard that in turn manages the electrical load, but they directly enter into a logic of the clock.

This and other characteristics shall become more readily apparent from the following description of a preferred embodiment, illustrated purely by way of non limiting example in the accompanying drawing tables, in which:
- figure 1 shows a device according to the present invention in a function diagram;
- figure 2 shows the device of figure 1, according to an embodiment variant;

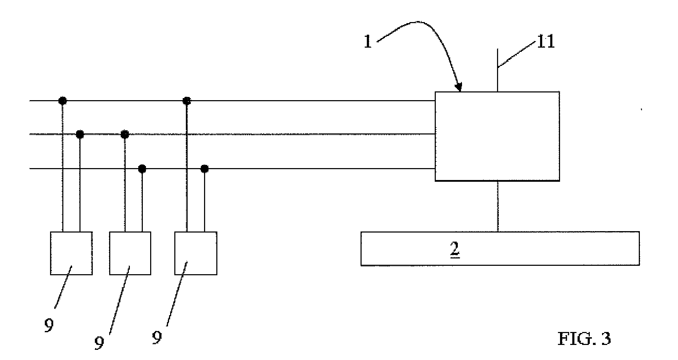

- figure 3 shows the device of figure 1 inserted in an electrical system.

In the figures, the reference number 1 designates a device for managing an electrical load 2, according to the present invention.

The device 1 comprises a first logic 3 defining an electronic clock and connected to interface means 4 for transmitting input and output data. Said interface means 4 preferably consist of a touch screen, but, alternatively, other known means can be used that enable the user to display information contained in the logic 3 and to transfer information to the logic 3 itself, in a step of programming / regulating the clock, according to a technology that is known in itself.

Said first logic 3 is connected to a terminal 5 by means of a management relay 6, to allow a connection to the electrical load 2.

The device 1 also comprises, originally, a second logic 7 interconnected with the first logic 3 and provided with at least one connection 8 to external control devices 9 to receive control signals of said control relay 6.

Said external control devices 9 can be constituted for example by push-buttons and switches, according to the prior art.

In the preferred embodiment illustrated herein, the device 1 also comprises an inter-exchange logic 10 connected to the first logic 3 and to the second logic 7 to facilitate the transfer of information from the first logic to the second one and vice versa.

It should be noted that said logics are constructed by means of a specifically produced electronic board. Alternatively, said logics can be constructed by means of a single, appropriately programmed PLC.

The fact that the first logic 3 defining the clock and connectable to the load 2 and the second logic 7 connectable to the control devices 9 are originally interconnected, i.e. mutually integrated, advantageously enables to manage the electrical load as follows.

The second logic 7, on the basis of the commands received from the control devices 9, through the management relay 6 activates or deactivates the load 2. At the same time, the first logic 3, on the basis of the regulation received through the interface means 4 (or based on the programming of the electronic clock), is able to act on the second logic 7, modifying its state, to cancel or modify the effects of the control devices 9. In other words, the first logic 3 acts on the second logic 7 at times determined by the clock, possibly cancelling the inputs which the second logic 7 has received from the external control devices 9 (e.g. as a result of errors or omissions).

Therefore, at pre-determined times, the first logic 3 acts on the management relay 6 and/or on the second logic 7, as a function of the settings received through the interface means 4.

Said interaction has the following effects.

The control devices 9, i.e. the push-buttons and the external switches (for example, but not necessarily, manual) do not control an electrical switchboard which in turn controls the electrical load 2, but they act on the logic of the electronic clock. In this way, the construction of a dedicated electrical switchboard is avoided. Thus, the electronic clock is not connected to an electrical switchboard but controls the electrical load 2 directly. This allows considerable simplification and economic saving.

Moreover, it should be kept in mind that the control device 9, if they are not used correctly (e.g. because of omissions) can alter the functions of the system, with the risk of severe consequences. In this light, the device 1 enables to manage said utilisation problems, because through the first logic 3 it is possible to analyse the state of the second logic 7 and possibly modify or cancel or correct the effects of the control devices 9, based on the time programming contained in the first logic 3.

The following case shall serve as an example. On the clock, it is programmed that at 8.00 p.m. the lights of the hallways must be turned off, to be turned on again at 7.00 a.m. Someone comes into the office at 8.30 and forgets the lights on when (s)he leaves. When the clock is programmed, it is possible to order to check whether any lights are on and to turn them off by programming on the clock a further turn-off command for midnight, in addition to 8.00 p.m. This is a simple example, but numberless results can be achieved because the inputs of the manual controls and those of the clock transit on a unified logic which controls a single management relay 6, which turns the electrical load 2 on or off.

This advantageously entails considerable energy saving and reduces fire hazards, thanks to the fact that through the first logic 3 (i.e. the clock logic), the effects of the control devices 9 can be analysed at pre-determined times (based on the settings of the clock), so that certain loads can be kept powered only when it is necessary.

It should also be noted that in the device 1 the second logic is preferably provided with at least two connections 8 to the external control devices 9 to receive the control signals.

In this way, the device 1 originally enables to receive any combination of external commands from push-buttons or switches of various types, or by control devices that provide the OFF command, or that provide the ON command, or that provide the OFF and ON commands in succession. In this light, the present invention, to obtain the results of known systems in terms of combination of the commands by means of the control devices 9, enables to use a smaller number of conductors and to avoid the presence of additional relays, with evident cost savings.

It should be noted that the programmable logics 3 and 7 enable to manage the device 1 in such a way that the control signals received from the external control devices 9 prevail over the programming of the clock or vice versa, indifferently.

Moreover, it should be noted that the interface means 4 originally comprise (instead of or in addition to said touch screen) an element for interconnection with the exterior, to transmit input and output information into and out of the device. In this way, it is possible remotely to control the information displayed on the touch screen (e.g. using a printer) or effect a remote programming of the clock, e.g. using a computer.

Therefore, all operations for managing the device 1 are to be carried out remotely.

Said interconnecting element can be constituted for example by an emitter - receiver system or other substantially known systems.

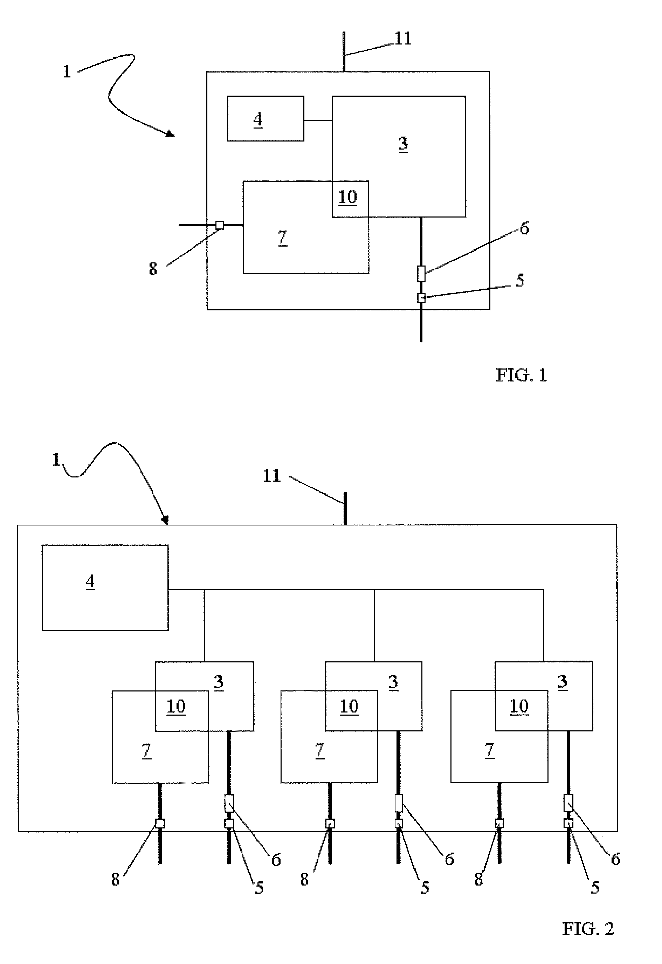

According to an additional aspect of the present invention, a plurality of clocks are integrated in the management device 1, as schematically shown in figure 2.

In this case, the device 1 comprises a plurality of said first logics 3, defining a plurality of corresponding electronic clocks, and a plurality of said second logics 7, each interconnected with a corresponding first logic 3 and connected to a corresponding management relay 6 connectable to a corresponding electric load 2.

It should be noted that, in the preferred embodiment shown in figure 2, all the logics are connected to the interface means 4, which are shared by all the clocks.

Therefore, said management device, which shall thereafter be referred to as "multi-clock" comprises a plurality of devices 1 of the type described above (defining a single clock) having shared interface means 4.

Moreover, the device 1, in the multi-clock version, comprises an interconnection module (not shown) of said plurality of first logics, so that the various electronic clocks can share information and possibly operating in co-ordinated fashion on the basis of a shared programming.

It should be noted that said plurality of logics can be constructed by means of an appropriately programmed PLC, or by means of a dedicated electronic board. Said implementation allows considerable saving also in terms of size.

Moreover, by means of the interconnection to a printer, all the starts and stops of the loads (programmed or not programmed by the interface means 4 of the clock) can be monitored.

The multi-clock management device described above further presents the following advantages.

First of all, there is a lower cost of manufacture and a greater constructive simplicity, with respect to the case in which a plurality of traditional clocks is arranged in parallel.

In this light, note that said device 1 if provided with a single power supply 11; therefore, a single power supply system allows a lower cost of construction.

Having a plurality of electronic clocks integrated in a single management device enables to view and programme multiple clocks through a single interface 4; nevertheless, each clock is connected to corresponding control devices 9, independent from each other because each clock is provided with its own connections 8 and to its own management relay 6.

Note that the multi-clock device 1 is to be housed and wired in a single container, provided with a single touch screen panel and defining any number of electronic clocks.

As a whole, the present invention allows the following advantages.

Plant construction is simplified, because fewer conductors to the control devices are necessary.

Costs are reduced because the construction of an electric control switchboard is avoided and the installation is simplified.

A plurality of electronic clocks, all adjustable with a single interface panel, are grouped in a single device.

Risks in the management of the plant are avoided, e.g. lights left on, because the managing device 1 enables to verify, at pre-set times, the effect of the external control devices and to modify it. In this way, waste of electrical energy and fire hazards are also avoided.

With print-outs or other recording means it is also advantageously possible to have a remote control on the effects of the manual devices and on the actions on the touch screen.

## Claims

1. A device (1) for managing an electrical load (2), comprising:
- an electronic clock defined by a first programmable logic (3);
- interface means (4) connected to the electronic clock to transmit input and output data therefrom;
- a management relay (6) commanded by the electronic clock and connectable to the electrical user (2),
**characterised in that** said clock comprises a second programmable logic (7) interconnected with the first programmable logic (3) and provided at least one connection (8) to external control devices (9) to receive control signals for said management relay (6), so that, at predetermined times, the first logic (3) acts on the management relay (6) and/or on the second logic (7) to cancel the effect of the control devices (9), as a function of the settings received through the interface means (4).

2. Device as claimed in claim 1, comprising an interchange logic (10) connected to the first and to the second logic (3, 7) for a transfer of information from the first logic to the second logic and vice versa.

3. Device as claimed in claim 1 or 2, wherein the second programmable logic (7) is provided with at least two connections (8) able to be connected to external control devices (9) to receive control signals.

4. Device as claimed in claim 1, comprising:
- a plurality of said first logics (3) defining a plurality of corresponding electronic clocks;
- a plurality of said second logics (7), each one interconnected with a corresponding first logic (3) and connected to a corresponding management relay (6) connectable to a corresponding electrical load (10).

5. Device as claimed in claim 4, wherein all the first logics (3) are connected to shared interface means (4).

6. Device as claimed in claim 4 or 5, comprising a module for interconnecting the logics defining said plurality of clocks.

7. Device as claimed in claim 4 or 5 or 6, wherein said pluralities of first and second logics (3, 7) are implemented by means of a dedicated electronic board.

8. Device as claimed in any of the previous claims, wherein the interface means (4) comprise a touch screen.

9. Device as claimed in any of the previous claims, wherein the interface means (4) comprise an element for interconnection with the exterior, able to transmit input and output information into and out of the device (1), for a remote management of the device itself.

10. Device for managing a plurality of electrical loads,
**characterised in that** it comprises, in combination:
- a plurality of electronic clocks;
- interface means (4) connected to said plurality of electronic clocks to transmit input and output data therefrom;
- a plurality of management relay (6), each controlled by a corresponding electronic clock and connectable to an electronic load (2), to activate it / deactivate it at pre-determined times, according to the settings received through the interface means (4).

11. Device as claimed in claim 10, wherein said plurality of first and second electronic clocks is implemented in a dedicated electronic board.

12. Device as claimed in claim 10 or 11, in which each clock comprises a programmable logic provided with two or more connections (8) to external control devices (9) to receive control signals of the corresponding management relay (6), so that, at pre-determined times, said programmable logic acts on the management relay (6) if need be by cancelling the effect of the control devices (9), according to the settings received through the interface means (4).

13. Device as claimed in any of the claims from 10 through 12, wherein the interface means (4) comprise an element for interconnection with the exterior, able to transmit input and output information into and out of the device (1), for a remote management of the device itself.
